# EUROPÄISCHE PATENTANMELDUNG

(11) **EP 3 916 335 A1**
(43) Veröffentlichungstag der Anmeldung: **01.12.2021**
(21) Anmeldenummer: 20176792.8
(22) Anmeldetag: 27.05.2020
(51) Int. Cl.: F28D 15/00

(54) **ÖLKÜHLUNG, GETRIEBE UND SIMULATION**

(71) Anmelder: Flender GmbH, 46395 Bocholt (DE)
(72) Erfinder: Becka, Simon, 46487 Wesel (DE)
(74) Vertreter: Michalski Hüttermann & Partner Patentanwälte mbB

(57) **Zusammenfassung**

Die Erfindung betrifft eine Ölkühlung (GOC). Zur Verbesserung der Zuverlässigkeit und der Energiebilanz wird vorgeschlagen, dass die Ölkühlung (GOC) mindestens eine Leitung (CON) umfasst, wobei die Leitung (CON) mindestens einen geschlossenen Kreislauf (CYC) für ein Kühlmittel (RFR) definiert, wobei die Leitung (CON) sich entlang einer Fließrichtung (FDR) des Kreislaufs (CYC) erstreckt und umfasst:
- einen als Wärmetauscher ausgebildeten Heizabschnitt (HSP) zur Aufnahme von Wärmeenergie (HEG) aus einem Getriebeöl (GOL),
- einen Steigabschnitt (LFT), der in betriebsfertiger Ausrichtung derart ausgebildet ist, dass entlang der Fließrichtung (FDR) das Kühlmittel (RFR) eine positive Höhendifferenz (HDF) hinsichtlich der Schwerkraft (GRV) überwindet,
- einen als Wärmetauscher ausgebildeten Kühlabschnitt (CSP) zur Abgabe von Wärmeenergie (HEG) aus dem Kühlmittel (RFR) in ein Umgebungsmedium (SRM). Daneben betrifft die Erfindung auch ein Getriebe (GTR), ein Verfahren zur Simulation des Betriebs einer erfindungsgemäßen Ölkühlung (GOC) und ein entsprechendes Computerprogrammprodukt.

## Beschreibung

Die Erfindung betrifft eine Ölkühlung. Daneben betrifft die Erfindung auch ein Getriebe, Verfahren zur Simulation des Betriebs einer erfindungsgemäßen Ölkühlung und ein entsprechendes Computerprogrammprodukt.

Getriebe werden während des Betriebes durch die anfallende Verlustleistung sehr warm. Die sich einstellende Öltemperatur limitiert die zulässige mechanische Grenzleistung der Getriebe. Zur Kühlung der Getriebe existieren mehrere Lösungen, deren Gemeinsamkeiten darin liegt, dass diese entweder zusätzliche Primärenergie benötigen (zum Beispiel durch Pumpen oder Lüfter) oder eine deutliche Kostensteigerung (zum Beispiel durch an dem Gehäuse angegossene Rippen) zur Folge haben.

Bekannte Lösungen zur Ölkühlung können wie folgt klassifiziert werden:
1. Indirekte Kühlung: Hierbei handelt es sich um eine Kühlung des Öls über die Gehäuseoberfläche. Die um das Getriebe zirkulierende Luft führt zu einer Wärmeabgabe. Zur Verbesserung werden die Getriebe häufig mit einer Oberflächenvergrößerung in Form von z.B. Rippen ausgeführt. Eine Zusätzliche Verbesserung der Wärmeabgabe wird zusätzlich über einen Lüfter angestrebt.
2. Direkte Kühlung:
   a. Aktiv:
      Unter diesen Punkt fallen alle Konzepte, die dazu dienen, das Öl aus dem Getriebe heraus zu fördern, dort zu kühlen (mittels eines separaten Wärmetauschers) und dem Getriebe wieder zuzuführen. Beispielhaft können hier DE 10 2012 022 022 A1 und Auszüge aus DE 10 2012 022 022 A1 genannt werden. Die Ölförderung wird dabei immer durch eine Pumpe realisiert oder das Öl wird an einem oberen Getriebepunkt entnommen wohin es durch die Rotation der Zahnräder befördert wurde, so dass das Getriebe selbst als Förderpumpe eingesetzt wird.
   b. Passiv:
      Hierbei handelt es sich zum Beispiel um Elemente wie Heat-Pipes, die Wärme gezielt aus dem Getriebe heraus leiten, um sie über geeignete Elemente an die Umgebung abzugeben.

Ausgehend von den Problemen und Nachteilen des Standes der Technik hat es sich die Erfindung zur Aufgabe gemacht, eine Ölkühlung eingangs definierter Art derart weiterzubilden, sodass die erläuterten Probleme und Nachteile vermieden werden.

Zur erfindungsgemäßen Lösung der Aufgabe wird eine Ölkühlung eingangs definierter Art mit den zusätzlichen Merkmalen des unabhängigen Anspruchs 1 vorgeschlagen. Daneben schlägt die Erfindung ein Getriebe mit einer derartigen Ölkühlung, ein Verfahren zur Ölkühlung und ein Verfahren zur Simulation und ein entsprechendes Computerprogrammprodukt vor. Die jeweils abhängigen Unteransprüche beinhalten vorteilhafte Weiterbildungen der Erfindung.

Ein besonderer Vorteil der Ölkühlung nach der Erfindung ist, dass diese ohne zusätzliche mechanisch bewegte feste Bauteile sowie ohne Modifikationen am Gehäuse auskommt.

Die Erfindung beschreibt einen geschlossenen Kühlkreislauf, der ohne zusätzliche Energie der Kühlung von Getriebeöl dient. Antrieb für die Zirkulation ist lediglich die Schwerkraft sowie die physikalischen Eigenschaften des eingesetzten Kühlmediums.

Eine vorteilhafte Weiterbildung sieht vor, dass die Leitung zumindest abschnittsweise zueinander parallel und zur Fließrichtung parallel verlaufende Rohre aufweist. Das Attribut "parallel" bedeutet hierbei keine Parallelität im geometrischen Sinn, sondern vielmehr eine parallele Anordnung im verfahrenstechnischen Sinn.

Eine andere bevorzugte Weiterbildung der Erfindung sieht vor, dass der Steigabschnitt im Vergleich zu denen als Wärmetauscher ausgebildeten Abschnitten derart ausgebildet ist, dass dieser einen höheren Wärmeübergangswiderstand bezüglich eines vom Kühlmittel fortweisenden Wärmeübergangs aufweist. Der Steigabschnitt ist bevorzugt mit einer den Wärmeübergangswiderstand erhöhenden Isolierung versehen. Auf diese Weise wird, die durch die geringere Dichte des wärmeren Kühlmittels begünstigte Strömung nach oben nicht durch eine in diesem Abschnitt abkühlende Ableitung der Wärme beeinträchtigt.

Besonders zweckmäßig ist eine Ausbildung der Erfindung, bei der das Kühlmittel Bestandteil der Ölkühlung ist und bei der in dem von der mindestens einen Leitung gebildeten Hohlraum eine derartige Stoffmenge an Kühlmittel vorgesehen ist, dass sich bei einer mittleren Betriebstemperatur ein mittlerer Betriebsdruck einstellt, so dass bei einem bestimmten im vorgesehenen Betriebszustand sich ergebenden Betriebstemperaturbereich während eines Umlaufs im geschlossenen Kreislauf des Kühlmittels ein Phasenwechsel des Kühlmittels erfolgt. Auf diese Weise kann neben der normalen Wärmeaufnahmekapazität des Kühlmittels auch zusätzlich die Verdampfungsenthalpie des Kühlmittels pro Umlauf zum Transport der Wärme genutzt werden.

Eine alternative vorteilhafte Weiterbildung sieht vor, dass während eines Umlaufs im geschlossenen Kreislauf des Kühlmittels kein Phasenwechsel des Kühlmittels erfolgt. Auf diese Weise können die entsprechenden Wärmetauscher der gesamten Anordnung ohne besondere Anpassung an den Phasenwechsel gestaltet werden.

Eine vorteilhafte Weiterbildung der Erfindung sieht vor, dass die Ölkühlung als eine Getriebeölkühlung zur Kühlung eines Getriebeöls eines Getriebes ausgebildet ist.

Die Erfindung bezieht sich auch auf ein computerimplementiertes Verfahren zur Simulation einer Anordnung nach mindestens einer durch die Ansprüche definierte Merkmalskombination. Dementsprechend umfasst die Erfindung einerseits das körperliche Gebilde mit den erfindungsgemäßen Merkmalen und andererseits auch einen digitalen Zwilling, wie er beispielsweise zum Zwecke der Simulation der Anordnung bzw. des Betriebes der Anordnung mittels mindestens eines Computers eingesetzt wird. Daneben bezieht sich die Erfindung auch auf ein entsprechendes Computerprogrammprodukt.

Die erfindungsgemäße Ölkühlung zeichnet sich insbesondere dadurch aus, dass es sich um ein autarkes System zur Abfuhr von Wärme aus dem Getriebeinneren ohne zusätzliche mechanische Elemente handelt. Ein Vorteil besteht darin, dass eine Kühlung ohne zusätzliche Elemente gewährleistet ist und Wärme direkt aus dem Ölsumpf nach außen abgeführt wird, ohne den Umweg über z.B. das Gehäuse in Kauf nehmen zu müssen. Auf die Vergrößerung der äußeren Getriebeoberfläche kann daher bei ausreichender Dimensionierung verzichtet werden. Es sind keine aktiven oder beweglichen mechanischen Elemente, wie z.B. Pumpen, erforderlich; dadurch ist die Anordnung weniger fehleranfällig. Die Ölkühlung kann an jeder Getriebeseite bzw. an dem Gehäuse des Getriebes angebracht werden vorausgesetzt, dass die Steigleitung entgegen der Schwerkraft angeordnet ist. An einem Getriebe können auch mehrere Systeme angebracht werden. Durch die zusätzliche Umströmung durch z.B. Lüfter kann die Wärmeabgabe weiter verbessert werden. Zum Anschluss des Systems werden beispielsweise lediglich zwei Bohrungen benötigt, um die Leitungen durch die Getriebegehäusewand zu verlegen.

Im Folgenden ist die Erfindung anhand eines speziellen Ausführungsbeispiels zur Verdeutlichung näher beschrieben. Es zeigen:
Figur 1 eine schematische, vereinfachte Darstellung eines Getriebes mit einer Ölkühlung nach der Erfindung,
Figur 2 eine schematische Darstellung einer auf einem Computer ablaufenden Simulation einer Anordnung nach der Erfindung, Computerprogrammprodukt.

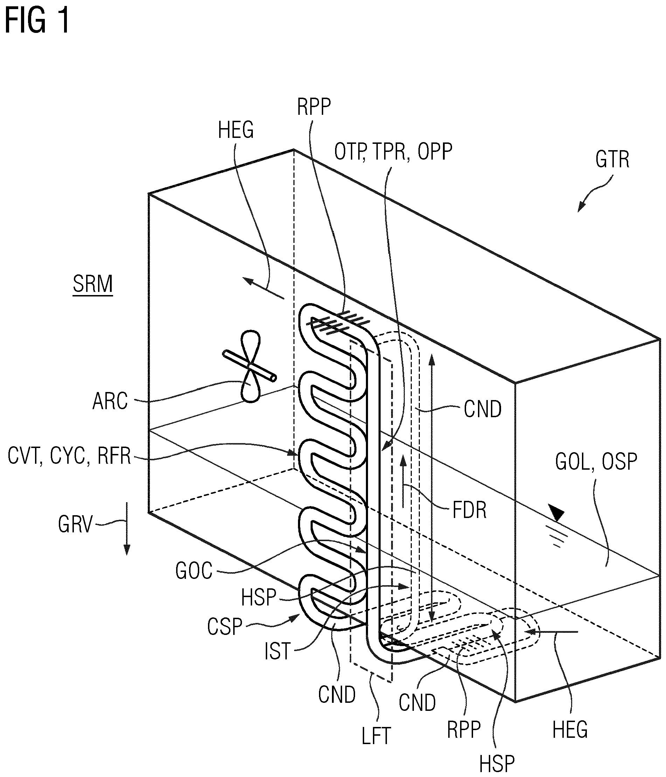

Figur 1 zeigt eine schematische, vereinfachte Darstellung eines Getriebes GTR mit einer Ölkühlung GOC umfassend eine Leitung CON wobei die Leitung CON einen geschlossenen Kreislauf CYC für ein Kühlmittel RFR definiert.

In der Darstellung ist die Ölkühlung GOC als eine Getriebeölkühlung zur Kühlung eines Getriebeöls bzw. Öls (Ölsumpf OSP) eines Getriebes GTR ausgebildet ist.

Optional sind in der Darstellung auch Leitungen CND (gestrichelt) dargestellt die zumindest abschnittsweise zueinander parallel und zur Fließrichtung FDR parallel verlaufende Rohre bzw. Leitungen aufweisen.

Grundsätzlich erstreckt sich die Leitung CON entlang einer Fließrichtung FDR des Kreislaufs CYC. Die Leitung umfasst hierbei:
- einen als Wärmetauscher ausgebildeten Heizabschnitt HSP zur Aufnahme von Wärmeenergie HEG aus einem Getriebeöl GOL,
- einen Steigabschnitt LFT, der in betriebsfertiger Ausrichtung derart ausgebildet ist, dass entlang der Fließrichtung FDR das Kühlmittel RFR eine positive Höhendifferenz HDF hinsichtlich der Schwerkraft GRV überwindet,
- einen als Wärmetauscher ausgebildeten Kühlabschnitt CSP zur Abgabe von Wärmeenergie HEG aus dem Kühlmittel RFR in ein Umgebungsmedium SRM.

Das System besteht im Wesentlichen aus Rohren, die mit dem Kühlmittel RFR gefüllt sind. Als Kühlmittel RFR oder auch Kühlmedium können zum Beispiel Wasser, Öl, aber auch jegliche andere Flüssigkeit mit temperaturabhängiger Dichte eingesetzt werden. Der Heizabschnitt HSP ist im Ölsumpf OSP des Getriebes GTR angeordnet. Der Steigabschnitt LFT und der Kühlabschnitt CSP befinden sich auf der Außenseite des Getriebes GTR.

Die Wirkungsweise ist folgende:
1. Bei Betrieb des Getriebes GTR wird das Getriebeöl GOL erwärmt. Die Wärme überträgt sich auf den Heizabschnitt HSP und erwärmt dort das Kühlmittel RFR.
2. Das Kühlmittel RFR weist infolge der Erwärmung eine geringere Dichte auf, so dass sich ein Auftriebseffekt ergibt.
3. Da sich in dem Kühlabschnitt CSP aufgrund der höheren Dichte mehr Kühlmittel RFR befindet als in dem Steigabschnitt LFT, steigt das erwärmte Kühlmittel RFR in dem Steigabschnitt LFT entgegen der Schwerkraft nach oben.
4. Aus Kontinuitätsgründen erzeugt das Kühlmittel RFR einen Sog an der Verbindung von Kühlabschnitt CSP zu Heizabschnitt HSP, wodurch kaltes Kühlmittel RFR in die Heizabschnitt HSP fließt.
5. Das kalte Kühlmittel RFR erwärmt sich in dem Heizabschnitt HSP, so dass das Kühlmittel RFR im Kreislauf CYL zirkuliert aufgrund der Dichteunterschiede zwischen Heiz- und Kühlabschnitt und führt dabei Wärme aus dem Getriebeinneren nach außen ab.

Im Einzelnen sind folgende Weiterbildung jeweils einzeln oder in beliebiger Kombination von Vorteil:
Um das Kühlmittel RFR nicht schon beim Aufsteigen im Steigrohr bzw. Steigabschnitt LFT abzukühlen, was die Zirkulation behindern würde, ist der Steigabschnitt LFT vorzugsweise mit einer Isolierung IST versehen. Die Heizabschnitt HSP kann auf der Innen- und Außenseite zur Verbesserung des Wärmeaustauschs mit einer größeren Oberfläche, z.B. durch Rippen RPP (schematisch dargestellt), ausgeführt werden. Der Kühlabschnitt CSP kann auf der Außenseite zur Verbesserung des Wärmeaustauschs ebenfalls mit einer größeren Oberfläche, z.B. durch Rippen RPP, ausgeführt werden. Der Wärmeaustrag aus dem Kühlabschnitt CSP kann zusätzlich - zum Beispiel durch einen Lüfter ARC - verbessert werden. Die Leistungsfähigkeit des Systems kann durch die Gesamthöhe, die Rohrlänge in Heiz- und Kühlabschnitt CSP sowie den Rohrdurchmesser und die gewählten Umgebungsbedingungen und Oberflächenvergrößerungen eingestellt werden. Auch die Auswahl des Kühlmittels RFR hat Einfluss auf die Wärmeübertragungsleistung. Das System kann insbesondere hinsichtlich der Anzahl der Leitungen CND bzw. Rohrschleifen variiert werden.

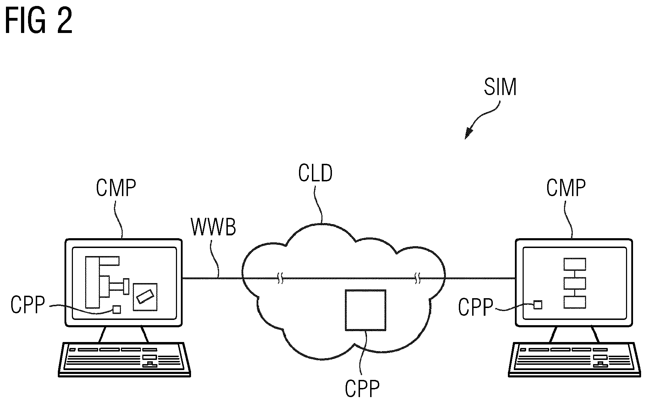

Figur 2 zeigt eine schematische Darstellung einer auf einem Computer CMP - hier auf mehreren Computern CMP eines Netzwerks WWB umfassend eine Cloud CLD - ablaufenden Simulation SIM einer Ölkühlung GOC nach der Erfindung. Die auf den Computern CMP installierte Software ist ein Computerprogrammprodukt CPP, dass bei Ausführung auf mindestens einem Computer CMP dem Benutzer mittels Schnittstellen (Bildschirm, Tastatur) eine Einflussnahme bzw. Konfiguration und einen Erkenntnisgewinn auf Basis der ausgeführten Simulation SIM ermöglicht, so dass insbesondere technische Gestaltungsentscheidungen mittels der Simulation unterstützt gemacht und verifiziert werden können.

## Patentansprüche

1. Ölkühlung (GOC) umfassend mindestens eine Leitung (CON), wobei die Leitung (CON) mindestens einen geschlossenen Kreislauf (CYC) für ein Kühlmittel (RFR) definiert,
wobei die Leitung (CON) sich entlang einer Fließrichtung (FDR) des Kreislaufs (CYC) erstreckt, umfassend:
- einen als Wärmetauscher ausgebildeten Heizabschnitt (HSP) zur Aufnahme von Wärmeenergie (HEG) aus einem Getriebeöl (GOL),
- einen Steigabschnitt (LFT), der in betriebsfertiger Ausrichtung derart ausgebildet ist, dass entlang der Fließrichtung (FDR) das Kühlmittel (RFR) eine positive Höhendifferenz (HDF) hinsichtlich der Schwerkraft (GRV) überwindet,
- einen als Wärmetauscher ausgebildeten Kühlabschnitt (CSP) zur Abgabe von Wärmeenergie (HEG) aus dem Kühlmittel (RFR) in ein Umgebungsmedium (SRM).

2. Ölkühlung (GOC) nach Anspruch 1, wobei die Leitung (CND) zumindest abschnittsweise zueinander parallel und zur Fließrichtung (FDR) parallel verlaufende Rohre aufweist.

3. Ölkühlung (GOC) nach Anspruch 1, wobei der Steigabschnitt (LFT) im Vergleich zu denen als Wärmetauscher ausgebildeten Abschnitten derart ausgebildet ist, dass er einen höheren Wärmeübergangswiderstand bezüglich eines vom Kühlmittel fortweisenden Wärmeübergangs aufweist.

4. Ölkühlung (GOC) nach Anspruch 1, 2 oder 3, wobei das Kühlmittel (RFR) Bestandteil der Ölkühlung (GOC) ist und in dem von der mindestens einen Leitung (CND) gebildeten Hohlraum (CVT) eine derartige Stoffmenge an Kühlmittel (RFR) vorgesehen ist, dass sich bei einer mittleren Betriebstemperatur (OTP) ein mittlerer Betriebsdruck (OPP) einstellt, so dass bei einem bestimmten im vorgesehenen Betriebszustand sich ergebenden Betriebstemperaturbereich (TPR) während eines Umlaufs im geschlossenen Kreislauf des Kühlmittels (RFR) ein Phasenwechsel des Kühlmittels (RFR) erfolgt.

5. Ölkühlung (GOC) nach Anspruch 1, 2 oder 3, wobei das Kühlmittel (RFR) Bestandteil der Ölkühlung (GOC) ist und in dem von der mindestens einen Leitung (CND) gebildeten Hohlraum (CVT) eine derartige Stoffmenge an Kühlmittel (RFR) vorgesehen ist, dass sich bei einer mittleren Betriebstemperatur (OTP) ein mittlerer Betriebsdruck (OPP) einstellt, so dass bei einem bestimmten im vorgesehenen Betriebszustand sich ergebenden Betriebstemperaturbereich (TPR) während eines Umlaufs im geschlossenen Kreislauf des Kühlmittels (RFR) kein Phasenwechsel des Kühlmittels (RFR) erfolgt.

6. Getriebeölkühlung umfassend eine Ölkühlung (GOC) nach einem der vorhergehenden Ansprüche 1-5 zur Kühlung eines Öls eines Getriebes (GTR).

7. Getriebe (GTR) umfassend eine Getriebeölkühlung nach Anspruch 6.

8. Computerimplementiertes Verfahren zur Simulation (SIM) einer Anordnung nach mindestens einem der vorhergehenden Ansprüche

9. Computerprogrammprodukt zur Durchführung eines Verfahrens nach Anspruch 8 mittels mindestens eines Computers (CMP).
